# DEMANDE DE BREVET EUROPEEN

(11) **EP 2 366 587 A1**
(43) Date de publication de la demande: **21.09.2011**
(21) Numéro de dépôt: 11155530.6
(22) Date de dépôt: 23.02.2011
(51) Int. Cl.: B60Q 1/14, F21V 14/08

(54) **Système optique pour véhicule automobile**

(30) Priorité: 05.03.2010 FR 1051601
(71) Demandeur: VALEO VISION, 93012 Bobigny (FR)
(72) Inventeur: Le Bars, Jean-François, 89275 Elchingen (DE); Romo, Jesus, 18003 Granada (ES); Lomas, Juan-Manuel, 23009 Jaen (ES); Thery, Stephane, 80360 Equancourt (FR); Sadoux, Grégoire, 92600 Asnières sur Seine (FR); Charret, Jean-Paul, 92130 Issy les Moulineaux (FR); Ravier, Jean-Paul, 94100 Saint Maur des Fossés (FR)

(57) **Abrégé**

L'invention concerne un système optique (100) pour véhicule automobile, notamment d'éclairage, comportant :
- un premier projecteur (1), notamment agencé pour un montage côté droit, ou respectivement gauche, du véhicule, ce projecteur étant agencé pour pouvoir basculer, optiquement, entre deux faisceaux partiels de types différents,
- un deuxième projecteur (2), notamment agencé pour un montage côté gauche, ou respectivement droit, du véhicule, ce projecteur étant, le cas échéant, agencé pour pouvoir basculer, optiquement, entre deux faisceaux partiels de types différents.

## Description

L'invention concerne notamment un système optique pour véhicule automobile.

EP 2 006 605 décrit un module optique de type elliptique comprenant une source de lumière associée à un réflecteur et fermé par un élément dioptrique du type lentille convergente, par exemple une lentille de type plan-convexe, lentille de Fresnel. Ce module peut être équipé d'un cache fixe ou mobile apte à intercepter au moins partiellement, selon sa position, le faisceau lumineux émis par l'ensemble source lumineuse/réflecteur. La forme du bord supérieur du cache permet de délimiter la coupure voulue dans le faisceau par imagerie avec la lentille convergente.

Pour plus de détails sur les modules à cache mobile, on peut notamment se reporter aux brevets EP 1 197 387, EP 1 422 471 ou EP 1 442 472. Le cache mobile, sur commande et grâce à la présence d'un moteur, peut prendre différentes positions par rapport à la source lumineuse, dont au moins une position dite « active » optiquement, c'est-à-dire une position où il occulte effectivement une partie du faisceau lumineux, notamment pour que le module émette un faisceau à coupure, comme un faisceau de type croisement (coupure oblique) ou anti-brouillard (coupure horizontale ou plate). Le cache peut ainsi présenter une ou plusieurs positions « actives », par exemple deux, une pour la fonction croisement trafic à droite et une pour la fonction trafic à gauche, et aussi une fonction dite « passive » où il n'occulte pas le faisceau lumineux, permettant ainsi au module d'émettre des faisceaux lumineux sans coupure du type faisceau de route. Pour des exemples de modules à cache fixe, on peut se rapporter notamment au brevet FR 2 754 039, qui décrit des modules aptes à émettre des faisceaux de croisement ou anti-brouillard par exemple.

On connaît également par le brevet US 7 201 505 un projecteur pour produire différents éclairages.

Il est connu d'améliorer le confort du conducteur en vision de nuit, en adaptant selon les besoins la portée et/ou l'intensité des faisceaux de croisement ou des faisceaux de route pour optimiser l'éclairage potentiel de la voie de circulation. Par exemple, il a été proposé une fonction dite faisceau d'autoroute (*Motorway Light* en anglais) et une fonction dite faisceau de ville (*Town Light* en anglais). Ces fonctions consistent à modifier la portée et/ou l'intensité lumineuse courante des faisceaux de croisement, selon la voie de circulation empruntée par le véhicule et/ou selon les conditions d'éclairage de l'environnement extérieur du véhicule. Plus particulièrement, lorsqu'un véhicule circule sur une voie à circulation rapide, telle qu'une autoroute ou voie de circulation analogue, il est opportun d'accroître la portée des faisceaux de croisement, pour faire porter efficacement au plus loin le faisceau lumineux émis (fonction faisceau d'autoroute). A contrario, il est opportun de diminuer légèrement la portée et d'élargir les faisceaux émis par les faisceaux de croisement lorsque le véhicule circule à proximité en environnement extérieurement éclairé, tel qu'en milieu urbain par exemple (fonction faisceau de ville). On pourra également par exemple se reporter au brevet EP 1 923 262, qui expose des modalités permettant d'adapter la portée d'un faisceau émis par un faisceau code associé à un faisceau de type autoroute.

Il existe un besoin, dans le domaine de l'automobile, de pouvoir illuminer la route devant soi en "mode éclairage route partiel", à savoir générer dans un faisceau route une ou plusieurs plages sombres correspondant aux endroits où sont présents des véhicules venant en sens inverse ou des véhicules roulant devant, de manière à éviter l'éblouissement des autres conducteurs tout en éclairant la route dans sa plus grande surface. Une telle fonction est appelée ADB (*Adaptive Driving Beam* en anglais).

Des produits sont actuellement développés à l'adresse du marché haut de gamme exigeant sur la performance. Par exemple, la transition entre faisceaux code et route doit se faire de manière douce et la performance de précision en mode ADB doit être excellente.

A ces fins, ces produits sont équipés de dispositifs électromécaniques complexes et de précision pilotés, par exemple, par l'intermédiaire d'un moteur pas à pas.

Ce type de moteur pas à pas est en effet capable de générer et reproduire, dans les conditions environnementales des projecteurs automobiles, des micro-déplacements compatibles avec des précisions de positionnement des coupures de faisceaux exigées, de nature à éviter l'éblouissement d'autres usagers.

Les moteurs pas à pas qui sont le plus souvent de type « bipolaire », à savoir équipés de deux enroulements pilotés quadratiquement en courant, nécessitent cependant une électronique de commande complexe et coûteuse associée à un dispositif de recopie capable de prévenir et corriger les pertes de pas.

Certains constructeurs automobiles sont aujourd'hui intéressés pour offrir une prestation semblable dans leurs véhicules de gammes inférieures.

La présente invention repose notamment sur l'idée d'utiliser des dispositifs d'éclairage bifonction pour la fonction ADB (*Adaptive Driving Beam* en anglais) avec une ou deux coupures verticales (notamment avec recouvrement en mode route).

La présente invention vise notamment à proposer une solution pour réduire les coûts, par exemple en s'affranchissant d'un moteur pas à pas.

L'invention a ainsi pour objet un système optique pour véhicule automobile, notamment d'éclairage, comportant :
- un premier projecteur, notamment agencé pour un montage côté droit, ou respectivement gauche, du véhicule, ce projecteur étant agencé pour pouvoir basculer, optiquement, entre deux faisceaux partiels de types différents,
- un deuxième projecteur, notamment agencé pour un montage côté gauche, ou respectivement droit, du véhicule, ce projecteur étant, le cas échéant, agencé pour pouvoir basculer, optiquement, entre deux faisceaux partiels de types différents,
système dans lequel :
- l'un au moins des deux projecteurs est agencé pour permettre un pivotement de l'un au moins des deux faisceaux partiels associés à ce projecteur autour d'un axe sensiblement vertical du véhicule, ce pivotement étant commandé en fonction au moins d'une information représentative de la présence d'un véhicule tiers dans l'environnement du véhicule considéré,
- l'un au moins des faisceaux partiels émis par les premier et deuxième projecteurs présente un segment de coupure, notamment sensiblement vertical, ce segment de coupure servant à délimiter une zone sombre dans un faisceau lumineux global résultant de la combinaison de ce faisceau partiel avec l'un des faisceaux partiels de l'autre projecteur, cette zone sombre étant de préférence variable lors d'un pivotement de l'un au moins des faisceaux partiels en fonction de l'information représentative de la présence d'un véhicule tiers dans l'environnement du véhicule considéré.

On entend ici par 'faisceau partiel' le faisceau droit ou gauche généré par l'un des projecteurs. Ce faisceau est dit 'partiel' car, pour obtenir le faisceau global du véhicule, il faut prendre en compte la somme des deux faisceaux partiels, à savoir la somme des faisceaux droit et gauche.

De préférence, l'un au moins des premier et deuxième projecteurs, notamment les deux projecteurs, est (sont) agencé(s) chacun pour pouvoir basculer, optiquement, dans des positions mécaniques stables, seulement entre deux faisceaux partiels de types différents. Autrement dit, ce (ou ces) projecteur(s) est (sont) de type bifonction.

Le basculement d'un faisceau partiel à un autre peut être piloté par un dispositif mécanique simple, robuste et peu coûteux, par exemple un actionneur de type électroaimant ou un moteur à courant continu avantageusement associés à un ressort mécanique de rappel en cas de défaut.

L'invention permet ainsi de s'affranchir d'un moteur pas à pas, et notamment de son électronique associée ainsi que du capteur de position assurant la non perte des pas.

Avantageusement le segment de coupure sensiblement vertical se prolonge par un segment de coupure, par exemple sensiblement horizontal, de manière à former une coupure sensiblement en L.

Dans un exemple de mise en oeuvre de l'invention, le premier projecteur est agencé pour pouvoir basculer, optiquement, entre le faisceau partiel à coupure sensiblement en L et un faisceau partiel de croisement présentant un segment de coupure oblique, notamment sensiblement à 15°.

Si on le souhaite, le deuxième projecteur est agencé pour pouvoir basculer, optiquement, entre un faisceau partiel à coupure sensiblement en L et un faisceau partiel à coupure plate.

Le cas échéant,
- le premier projecteur, notamment agencé pour pouvoir être monté côté droit du véhicule, est agencé pour pouvoir basculer, optiquement, entre le faisceau partiel à coupure sensiblement en L et le faisceau partiel de croisement présentant un segment de coupure oblique, notamment sensiblement à 15°,
- le deuxième projecteur, notamment agencé pour pouvoir être monté côté gauche du véhicule, est agencé pour pouvoir basculer, optiquement, entre un faisceau partiel à coupure sensiblement en L et un faisceau partiel à coupure plate,
système dans lequel :
- les deux faisceaux partiels à coupure en L droit et gauche peuvent former, en combinaison, un faisceau de route lorsque les premier et deuxième projecteurs émettent les faisceaux partiels à coupure en L, suivant des orientations angulaires respectives choisies de manière à ce que ces faisceaux partiels soient suffisamment rapprochés angulairement l'un de l'autre, la coupure en L de l'un des faisceaux partiels se trouvant alors dans le faisceau partiel de l'autre projecteur, et/ou
- les deux coupures en L droit et gauche peuvent délimiter la zone sombre lorsque les premier et deuxième projecteurs émettent les faisceaux partiels à coupure en L, suivant des orientations angulaires respectives choisies de manière à ce que ces faisceaux partiels soient suffisamment écartés angulairement l'un de l'autre, et/ou
- afin d'élargir encore la zone sombre permettant notamment d'éviter l'éblouissement d'un conducteur d'un véhicule tiers, le premier projecteur peut émettre le faisceau partiel à coupure en L tandis que le second projecteur émet le faisceau partiel à coupure plate, et/ou
- afin d'élargir au maximum la zone sombre permettant notamment d'éviter l'éblouissement d'un conducteur d'un véhicule tiers, le premier projecteur peut émettre le faisceau partiel de croisement avec le segment de coupure oblique, tandis que le second projecteur émet le faisceau partiel à coupure plate.

Dans le cas où les deux faisceaux partiels à coupure en L droit et gauche forment, en combinaison, un faisceau de route, l'écartement angulaire des deux faisceaux partiels peut créer à l'avant du véhicule un tunnel sombre.

L'écartement angulaire entre les deux faisceaux partiels à coupure en L est de préférence commandable en fonction de la vitesse du véhicule, notamment en vue de réduire ce tunnel sombre lorsque la vitesse diminue.

Dans un autre exemple de mise en oeuvre de l'invention:
- le premier projecteur, notamment agencé pour pouvoir être monté côté droit du véhicule, est agencé pour émettre au moins le faisceau partiel à coupure sensiblement en L, et éventuellement, de manière sélective, également un faisceau partiel de croisement présentant un segment de coupure oblique, notamment sensiblement à 15°,
- le deuxième projecteur, notamment agencé pour pouvoir être monté côté gauche du véhicule, est agencé pour pouvoir basculer, optiquement, entre un faisceau partiel route, sans coupure en L, et un faisceau partiel de croisement présentant un segment de coupure oblique, notamment sensiblement à 15°,
système dans lequel :
- en mode faisceau de 'croisement', les premier et deuxième projecteurs sont de préférence agencés pour émettre les faisceaux partiels de croisement à coupure, et/ou
- en mode faisceau de 'route', le premier projecteur est agencé pour émettre le faisceau partiel à coupure sensiblement en L, et le deuxième projecteur émet le faisceau partiel route, ces faisceaux partiels formant ensemble un faisceau global route, et/ou
- en mode 'rapprochement d'un véhicule tiers', le premier projecteur est agencé pour émettre le faisceau partiel à coupure sensiblement en L, et le deuxième projecteur émet le faisceau partiel de croisement, ces faisceaux partiels formant un faisceau global présentant une zone sombre de manière à éviter d'éblouir le conducteur du véhicule tiers.

Avantageusement le deuxième projecteur est agencé de manière à ce que le faisceau partiel de croisement puisse être abaissé et remonté, par exemple à l'aide d'un dispositif de réglage de l'assiette du projecteur.

De préférence, le premier projecteur est agencé de manière ce que le faisceau partiel à coupure en L associé puisse être tourné de la droite vers la gauche et vice-versa, et éventuellement de bas en haut et vice-versa.

Si on le souhaite, seul l'un des premier et deuxième projecteurs est agencé pour pouvoir faire varier l'orientation du ou des faisceaux partiels associés, l'autre projecteur émettant le ou les faisceaux partiels de manière fixe, à savoir sans possibilité de changement d'orientation du ou des faisceaux associés par rapport au véhicule.

Dans un exemple de mise en oeuvre de l'invention, l'orientation angulaire du ou des faisceaux partiels est commandée en fonction au moins d'une information choisie parmi : une vitesse du véhicule, un virage du véhicule, une détection d'un ou de plusieurs véhicules en rapprochement et/ou en éloignement notamment par une caméra ou un radar ou un lidar, une information reçue sur la localisation relative du véhicule adverse par exemple des données de localisation satellite de ce véhicule (GPS).

Avantageusement les projecteurs sont agencés de manière à ce que la zone sombre, destiné notamment à éviter d'éblouir un véhicule tiers, est déplaçable de manière à suivre le mouvement du véhicule tiers, notamment à l'aide de la détection du véhicule tiers par une caméra ou un radar ou un lidar.

Le cas échéant, les projecteurs sont agencés de manière à ce que la zone sombre, destiné notamment à éviter d'éblouir un véhicule tiers, est modifiable en largeur notamment de manière à suivre le mouvement du véhicule tiers, notamment à l'aide de la détection du véhicule tiers par une caméra ou un radar ou un lidar.

Dans un exemple de mise en oeuvre de l'invention, l'un des projecteurs est agencé de manière à pouvoir basculer optiquement d'un faisceau partiel à coupure sensiblement en L à un faisceau partiel de route.

Dans le cas où les deux faisceaux partiels à coupure en L droit et gauche forment, en combinaison, un faisceau résultant de route, l'écartement angulaire des deux faisceaux partiels est avantageusement nul et ne crée pas à l'avant du véhicule un tunnel sombre, et le véhicule peut être équipé de projecteurs complémentaires fixes de type route afin notamment de compenser la perte de performances induite par la juxtaposition des deux demi-coupures en mode route.

Dans le cas où les deux faisceaux partiels à coupure en L droit et gauche forment, en combinaison, un faisceau de route, l'effet de tunnel induit peut être supprimé par basculement automatique des coupures en mode code (coupure à 15°) sur la base d'informations issues de la caméra elle-même (détection ville, porte de garage, mur, virage,..), d'informations issues d'autres capteurs ou d'informations de localisation (GPS par exemple) par exemple.

Dans un exemple de mise en oeuvre de l'invention, les projecteurs peuvent être équipés de lampe halogène, de lampe à décharge dites « lampes au Xénon » de puissance comprise entre par exemple 25W et 35W ou d'un ensemble de diode émettrices agencées de manière telle qu'elles se substituent à une des lampes précédentes.

L'un des projecteur peut comporter un ensemble de caches, ces caches étant agencés pour réaliser la ou les coupures dans la ou les faisceaux partiels associés à ce projecteur, cet ensemble de caches étant par exemple mobile en rotation, de préférence à l'aide d'un moteur électrique.

Une partie de cet ensemble de caches peut être mobile en rotation, de préférence à l'aide d'un actionneur électrique de type électroaimant, l'autre cache étant fixe.

Les caches peuvent, si on le souhaite, être équipés localement d'éléments réflecteurs de la lumière de type plieuse de manière à augmenter les performances des faisceaux.

L'invention a également pour objet un système optique pour véhicule automobile, notamment d'éclairage, comportant :
- un premier projecteur, notamment agencé pour pouvoir être monté côté droit du véhicule, agencé pour émettre au moins un faisceau partiel à coupure sensiblement en L, et éventuellement, de manière sélective, également un faisceau partiel de croisement présentant un segment de coupure oblique, notamment sensiblement à 15°,
- un deuxième projecteur, notamment agencé pour pouvoir être monté côté gauche du véhicule, agencé pour pouvoir basculer, optiquement, entre un faisceau partiel route et un faisceau partiel de croisement présentant un segment de coupure oblique, notamment sensiblement à 15°,
système dans lequel les projecteurs sont agencés pour émettre le ou les faisceaux partiels sans possibilité de changement d'orientation du ou des faisceaux associés.

L'un au moins des projecteurs peut comporter un ensemble de caches, ces caches étant agencés pour réaliser la ou les coupures dans la ou les faisceaux partiels associés à ce projecteur.

Cet ensemble de caches comprend par exemple au moins une pièce mobile associée à au moins une pièce fixe, la pièce mobile étant déplacée à l'aide par exemple d'un actuateur électrique simple différent d'un moteur pas à pas, par exemple un électroaimant.

L'invention a encore pour objet un projecteur notamment pour un système défini ci-dessus, comportant un ensemble de caches, ces caches étant agencés pour réaliser la ou les coupures dans la ou les faisceaux partiels associés à ce projecteur, cet ensemble de caches étant mobile en rotation, de préférence à l'aide d'un moteur électrique. Cet ensemble de caches peut être réalisé sur une seule pièce commune.

L'invention concerne également un procédé pour générer dans un faisceau lumineux, notamment un faisceau de route, une zone sombre, à l'aide d'au moins un projecteur capable d'émettre un faisceau partiel avec un segment de coupure sensiblement vertical, et éventuellement également à l'aide d'un faisceau anti-brouillard du véhicule ou un faisceau 'cornering', ces derniers faisceaux ayant une coupure plate.

L'invention concerne encore un procédé pour générer, dans un faisceau lumineux, une zone sombre, ce procédé utilisant le système optique tel que défini ci-dessus

L'orientation angulaire de l'un au moins des faisceaux partiels est avantageusement commandée par un dispositif DBL (*Dynamic Bending Light* en anglais) du projecteur correspondant.

Le procédé peut comporter les étapes suivantes :
- recevoir au moins une information représentative de la présence d'un véhicule tiers, soit directement issue d'un dispositif de détection et localisation embarqué dans le véhicule tel que la caméra ou le radar ou le lidar, soit par exemple à partir des données de localisation reçues, notamment GPS, associées au véhicule tiers ou émises par le véhicule tiers,
- modifier la zone sombre en fonction au moins de ladite information.

L'invention pourra être mieux comprise à la lecture de la description détaillée qui va suivre, d'exemples de mise en oeuvre non limitatifs de l'invention, et à l'examen du dessin annexé, sur lequel :
- les figures 1 à 5 illustrent, schématiquement et partiellement, différents modes de fonctionnement d'un système selon un exemple de mise en oeuvre de l'invention,
- la figure 6 représente, schématiquement et partiellement, des éléments du système de la figure 1,
- les figures 7 et 8 représentent, schématiquement et partiellement, des éléments d'un projecteur du système de la figure 6,
- les figures 9 à 15 illustrent, schématiquement et partiellement, différents modes de fonctionnement d'un système selon un autre exemple de mise en oeuvre de l'invention,
- les figures 16 et 17 illustrent des caches d'un projecteur selon un exemple de l'invention.

L'invention peut s'appliquer à des projecteurs à lampes halogène et/ou à lampes xénon.

Les projecteurs bifonction peuvent être équipés également du mécanisme de « mode touriste » ou *"Traffic Change"* en anglais.

### Mode de fonctionnement de la fonction ADB avec une seule coupure verticale

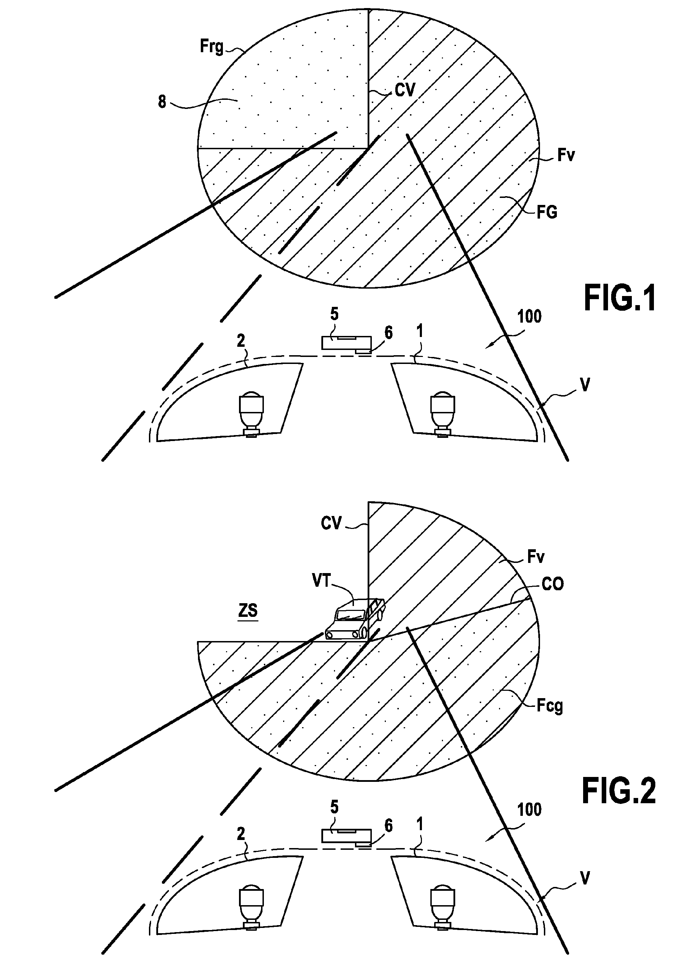

On a représenté sur les figures 1 à 5 un premier mode de réalisation de l'invention, se rapportant à une conduite de véhicule de type "trafic à droite".

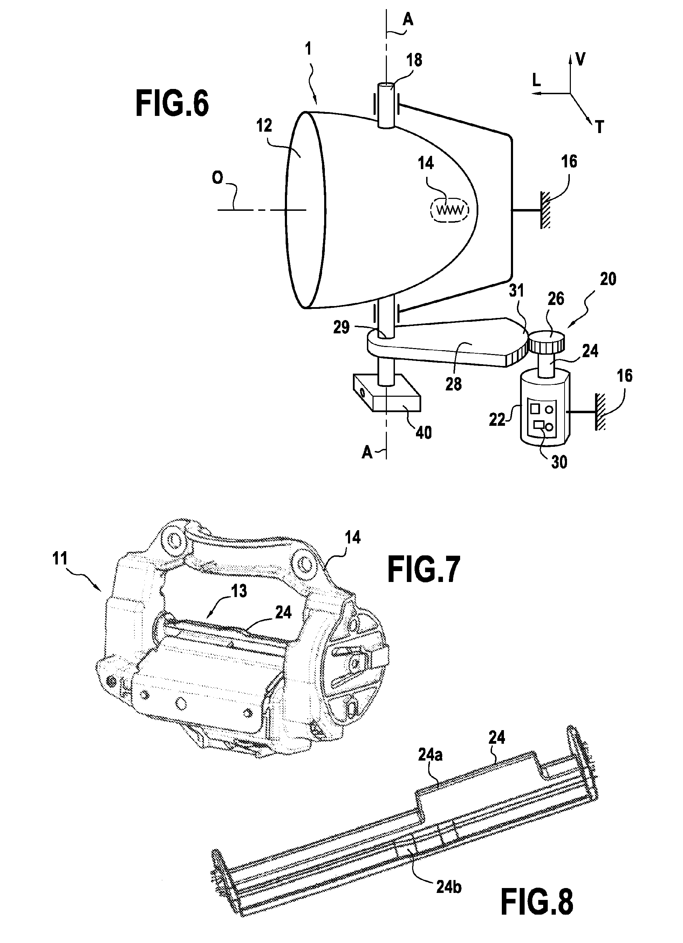

On a représenté sur ces figures 1 à 5 un système d'éclairage 100 pour véhicule automobile, comportant :
- un premier projecteur bifonction 1 agencé pour un montage côté droit du véhicule, ce projecteur 1 étant agencé pour pouvoir basculer, optiquement, entre deux faisceaux partiels de types différents,
- un deuxième projecteur bifonction 2 agencé pour un montage côté gauche du véhicule, ce projecteur étant agencé pour pouvoir basculer, optiquement, entre deux faisceaux partiels de types différents,
système dans lequel:
- l'un au moins des deux projecteurs 1 et 2 est agencé pour permettre un pivotement de l'un au moins des deux faisceaux partiels associés à ce projecteur autour d'un axe sensiblement vertical A du véhicule (l'axe A étant représenté par exemple sur la figure 6 commentée plus loin), ce pivotement étant commandé en fonction au moins d'une information représentative de la présence d'un véhicule tiers dans l'environnement du véhicule considéré,
- l'un au moins des faisceaux partiels Fv émis par les premier et deuxième projecteurs 1 et 2 présente un segment de coupure sensiblement vertical CV, ce segment de coupure CV servant à délimiter une zone sombre ZS (voir figures 2 à 4 par exemple) dans un faisceau lumineux global FG résultant de la combinaison de ce faisceau partiel avec l'un des faisceaux partiels de l'autre projecteur, cette zone sombre ZS étant variable lors d'un pivotement de l'un au moins des faisceaux partiels en fonction de l'information représentative de la présence d'un véhicule tiers VT dans l'environnement du véhicule V considéré.

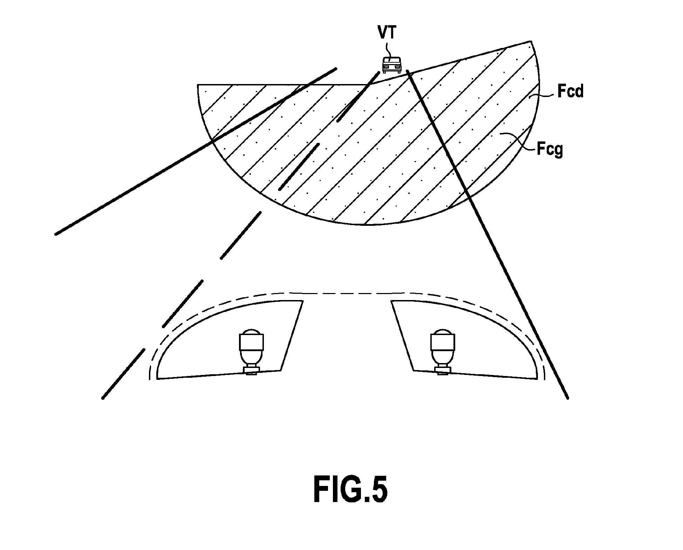

En mode "code", les projecteurs 1 et 2 produisent deux faisceaux partiels droit Fcd et gauche Fcg, superposés, avec chacun une coupure code oblique CO traditionnelle, comme illustré sur la figure 5.

La forme des coupures peut être optimisée pour un éclairage performant.

En mode ADB (ou *« selective beam* ») :
- le véhicule V est équipé d'une caméra 5 placée à l'avant et qui détecte la présence d'un véhicule tiers VT circulant en sens inverse sur la voie opposée (gauche) ainsi que sa position (verticale et horizontale), comme illustré sur la figure 2,
- du fait que le véhicule adverse VT circule sur la voie de gauche, la partie droite de la chaussée (sur laquelle le processeur 6 de la caméra 5 ne détecte aucun véhicule) peut donc être totalement illuminée sans pour cela gêner le conducteur adverse (voir figure 2),
- le processeur 6 active donc le projecteur bifonction droit 1 de manière à ce qu'il passe de la position d'éclairage « faisceau partiel à coupure code Fcd » (visible sur la figure 5) à une position « faisceau partiel à coupure verticale Fv » (visible sur la figure 2),
- la projection de cette coupure CV sur la route se traduit par une absence totale de lumière dans le quart en haut à gauche du faisceau droit. Le faisceau gauche Fcg, lui, reste en mode "code" pour ne pas aveugler le conducteur adverse.

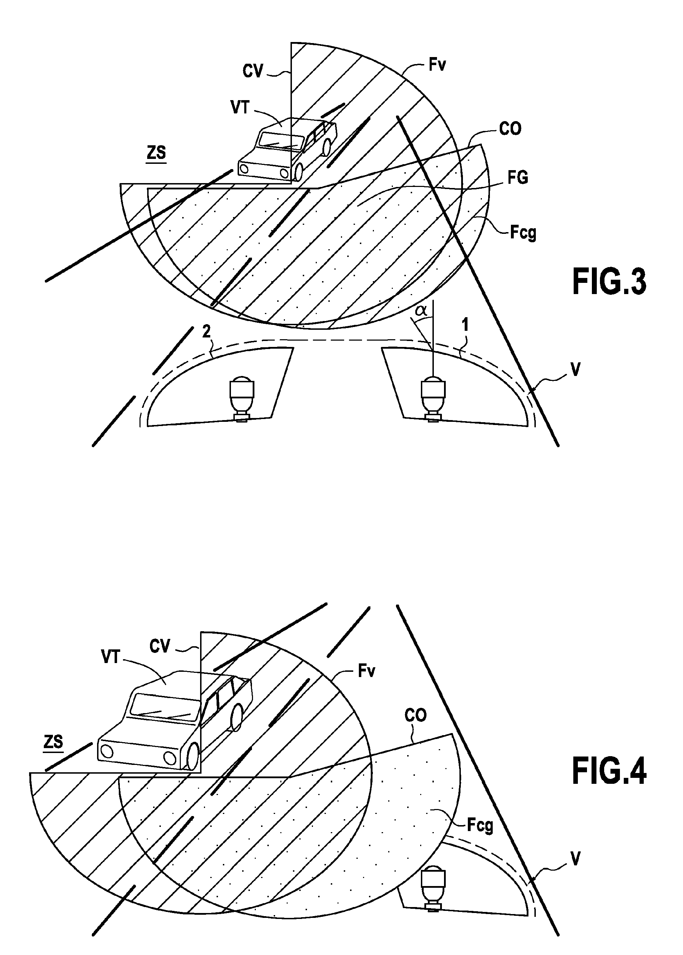

En mode rapprochement des deux véhicules, comme illustré sur la figure 3, le faisceau gauche Fcg reste en code, et n'éblouit pas le conducteur adverse.

Le faisceau droit Fv reste en mode "coupure verticale".

Le positionnement du projecteur droit 1 est en mode DBL (à savoir mobile en rotation autour de son axe A).

Le mode DBL est expliqué en détail plus loin.

L'angle de déviation *alpha* du faisceau partiel droit Fv (voir figure 3) est généré par le processeur 6 associé à la caméra 5 afin que la coupure verticale CV se déplace vers la gauche, permettant ainsi d'éclairer davantage le coté gauche sans éblouir le conducteur adverse du fait de la zone sombre ZS qui va se réduire au fur et à mesure que le véhicule adverse se rapproche (voir figures 3 et 4).

En mode route (à savoir aucun véhicule adverse et aucun véhicule devant n'est détecté), la coupure "code" CO du projecteur gauche 2 est retirée (basculement/rotation) de manière à libérer totalement le faisceau partiel route Frg sans aucune occultation, alors que le faisceau droit Fv présente la zone sombre ZS due à la coupure verticale CV (voir figure 1).

Il s'ensuit, du fait de la superposition des deux faisceaux partiels droit et gauche Fv et Frg (voir figure 1), un affaiblissement de l'intensité lumineuse du faisceau route résultant, dans la partie 8 en haut à gauche du faisceau global FG.

Cet affaiblissement peut être minimisé par deux effets qui peuvent être conjugués:
- la position de la coupure verticale CV du faisceau droit Fv peut être décalée à gauche du maximum du faisceau route (par exemple de 3° environ). Dans ce cas, lors d'une détection d'un véhicule lointain, le projecteur droit 1 subit une rotation de 3° à droite pour aligner le bord de la coupure sur l'axe vertical,
- le faisceau partiel Fv peut subir une rotation vers la gauche pour combler le manque de lumière induit par le cache en mode route.

Dans des variantes de l'invention, notamment en vue de réduire les coûts, il est possible de:
a) ne pas faire tourner le projecteur gauche 2, et ne garder le mouvement de rotation que pour le projecteur droit 1 ; cela permet de supprimer le coût du DBL pour le projecteur gauche 2,
b) supprimer les dispositifs DBL des deux projecteurs 1 et 2, et garder des faisceaux strictement alignés dans l'axe du véhicule et positionner la coupure verticale CV également dans l'axe, le maximum de route pouvant être décalé légèrement à droite.

Pour optimiser le faisceau global résultant FG, le maximum de code peut alors être obtenu par l'utilisation d'une coupure "code" équipée d'une partie réfléchissante de type plieuse qui permet de remonter le maximum coupures code des deux côtés, bien que le maximum de route soit décalé à droite sur le faisceau droit.

La coupure verticale CV peut, elle aussi, être équipée sur sa partie horizontale et verticale d'une plieuse (partie réfléchissante) pour rehausser la valeur de l'éclairement sous la coupure et élargir la zone du maximum de route.

Pour améliorer encore la performance du faisceau "route", le projecteur droit 1 (équipé ou non de la plieuse) peut être remonté de 1° à 2° environ, lors du passage en mode route par l'intermédiaire d'un dispositif de correction mécanique.

Ces variantes pourront, si on le souhaite, être avantageusement utilisées sur des projecteurs équipés de lampe au Xénon de 25 Watts de type D5S, D6S ou D7S.

Dans l'exemple décrit, le projecteur 1 (et éventuellement également le projecteur 2) est entraîné en rotation par un dispositif d'entraînement DBL 20 qui comporte ici un moteur électrique 22, par exemple un moteur pas à pas, qui comporte un arbre vertical rotatif 24' (voir figure 6).

Le moteur 22 est monté fixe par rapport à la caisse du véhicule automobile 16. Un pignon 26 est agencé à une extrémité supérieure libre de l'arbre 24.

Le dispositif d'entraînement DBL 20 peut comporter un secteur circulaire denté 28 qui s'étend depuis un sommet 29 jusqu'à un arc périphérique denté 31, le sommet 29 formant le centre de l'arc périphérique 31.

Le sommet 29 du secteur denté 28 est monté à rotation autour de l'axe "A" de manière que le secteur denté 28 soit solidaire en rotation avec le projecteur 1. Les dents 31 du secteur denté 28 sont engrenées avec les dents du pignon 26 de manière que le moteur 22 soit susceptible d'entraîner le projecteur 1 en rotation par l'intermédiaire du secteur denté 28.

Le dispositif d'entraînement DBL 20 comporte éventuellement une carte à circuit imprimé 30 qui est ici fixée au moteur 22.

Le dispositif d'entraînement 20 comporte, si on le souhaite, au moins deux capteurs à effet Hall qui sont agencés sur la carte à circuit imprimé 30.

Pour le rôle des capteurs permettant de mesurer la position angulaire du faisceau du projecteur dans son intervalle de débattement, il est possible de se référer à la demande de brevet FR 2 899 967.

Le projecteur 1 comporte une source de lumière 14 et un réflecteur 12 associé à cette source de lumière 14 pour émettre un faisceau suivant l'axe O.

Une lentille (non représentée) est prévue à l'avant du réflecteur.

Comme illustré sur les figures 7 et 8, chaque projecteur bifonction 1, 2 comporte un mécanisme ADB 11 permettant de passer d'un type de faisceau partiel à un autre type de faisceau partiel.

Ce mécanisme 11 de sélection de faisceaux partiels comporte un ensemble de caches 24, cet ensemble étant rotatif à l'aide d'un arbre 13 monté tournant sur un châssis 14' intégré dans un boîtier.

Cet arbre 13 peut être entraîné par un moteur à courant continu associé à un simple ressort de rappel.

L'ensemble 24 comprend par exemple un cache 24a pour produire le faisceau partiel à coupure CV (coupure en L) et celui 24b du code partiel (à coupure oblique).

### Mode de fonctionnement de la fonction ADB avec deux coupures verticales

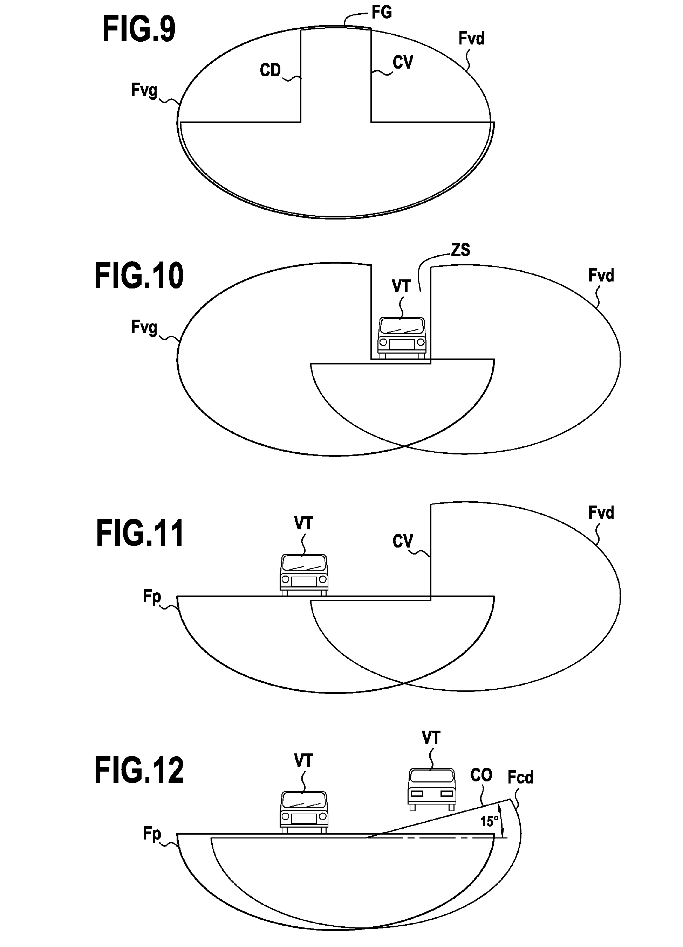

Dans ce mode de réalisation illustré sur les figures 9 à 15, le premier projecteur 1, monté côté droit du véhicule, est agencé pour pouvoir basculer, optiquement, entre un faisceau partiel à coupure en L, référencé Fvd sur les figures 9 à 11, et un faisceau partiel de croisement, référencé Fcd sur la figure 12, présentant un segment de coupure oblique CO à 15°.

Le deuxième projecteur 2, monté côté gauche du véhicule, est agencé pour pouvoir basculer, optiquement, entre un faisceau partiel à coupure sensiblement en L, référencé Fvg sur les figures 9 et 10, et un faisceau partiel à coupure plate, référencé Fp sur la figure 11.

Les deux faisceaux partiels à coupure en L droit et gauche, Fvd et Fvg, peuvent former, en combinaison, un faisceau global FG de route lorsque les premier et deuxième projecteurs 1 et 2 émettent les faisceaux partiels à coupure en L, Fvd et Fvg, suivant des orientations angulaires respectives choisies de manière à ce que ces faisceaux partiels soient suffisamment rapprochés angulairement l'un de l'autre, la coupure CV en L de l'un des faisceaux partiels se trouvant alors dans le faisceau partiel de l'autre projecteur (voir figure 9).

Les deux coupures CV en L droit et gauche peuvent délimiter la zone sombre ZS lorsque les premier et deuxième projecteurs 1 et 2 émettent les faisceaux partiels à coupure en L, suivant des orientations angulaires respectives choisies de manière à ce que ces faisceaux partiels soient suffisamment écartés angulairement l'un de l'autre (voir figure 10).

Afin d'élargir encore la zone sombre ZS permettant notamment d'éviter l'éblouissement d'un conducteur d'un véhicule tiers VT, le premier projecteur 1 peut émettre le faisceau partiel Fvd à coupure en L tandis que le second projecteur 2 émet le faisceau partiel Fp à coupure plate (voir figure 11).

Afin d'élargir au maximum la zone sombre ZS permettant d'éviter l'éblouissement d'un conducteur d'un véhicule tiers VT, le premier projecteur 1 peut émettre le faisceau partiel de croisement Fcd avec le segment de coupure oblique CO, tandis que le second projecteur 2 émet le faisceau partiel à coupure plate Fp (voir figure 12).

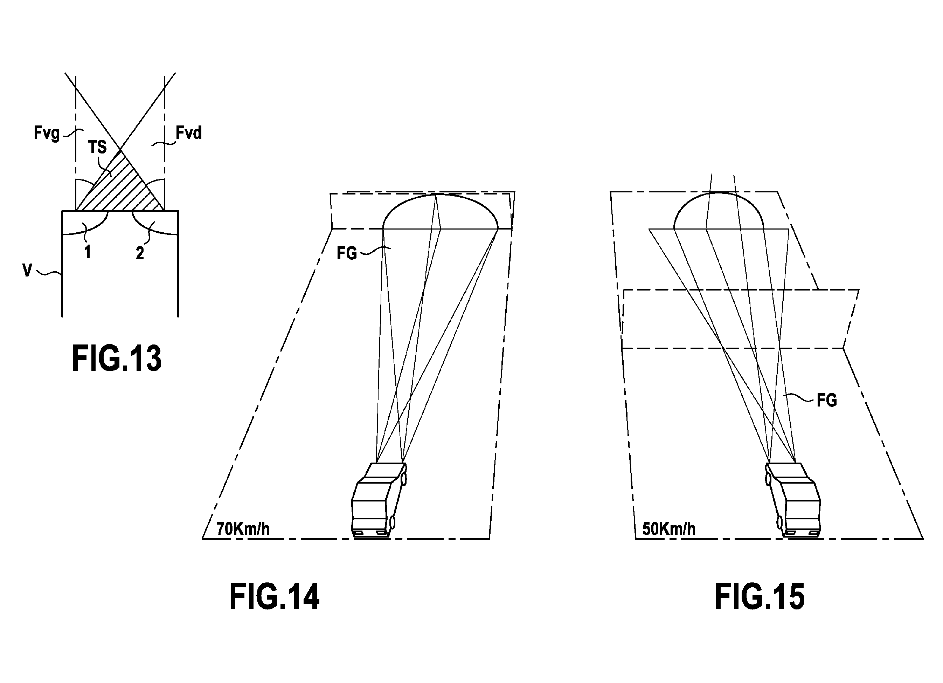

Dans le cas où les deux faisceaux partiels à coupure en L droit et gauche forment, en combinaison, un faisceau FG de route (voir figure 9), l'écartement angulaire des deux faisceaux partiels Fvd e Fvg peut créer à l'avant du véhicule un tunnel sombre TS, comme illustré sur la figure 13.

L'écartement angulaire entre les deux faisceaux partiels à coupure en L est de préférence pilotable en fonction de la vitesse du véhicule, notamment en vue de réduire ce tunnel sombre TS lorsque la vitesse du véhicule diminue.

Les maxima du faisceau route des projecteurs droit et gauche 1 et 2 sont par exemple situés à environ 3° des coupures verticales du coté de la partie éclairée.

En mode ADB, lorsqu'un véhicule VT adverse ou suivi est détecté, le processeur 6 ou calculateur associé à la caméra 5 génère des commandes de rotation des dispositifs DBL droit et gauche afin que le ou les véhicules tiers VT se trouvent à l'intersection des deux zones sombres ZS générées par les faisceaux occultés dans les quarts gauche et droit (respectivement pour les projecteurs droit et gauche), comme illustré sur la figure 10.

En mode "route", le faisceau global FG est constitué par la superposition des faisceaux à coupures verticales (*L-Shape* en anglais), comme visible sur la figure 9.

Le tunnel sombre TS est plus ou moins proche du véhicule (par exemple à environ 20 m).

Ce tunnel TS est dû à l'écartement des projecteurs gauche et droit et à la nature des faisceaux à coupure en L.

En l'absence de faisceau route additionnel, l'idée est de faire converger les faisceaux à l'aide des dispositifs DBL en fonction de la vitesse véhicule V.

Les faisceaux Fvd et Fvg à coupures verticales, droit et gauche, sont orientés vers le centre par rotation afin de masquer le tunnel sombre TS et ainsi fournir un faisceau route.

Par exemple, à une vitesse de 70 km/h, la zone de recouvrement des faisceaux Fvd et Fvg peut être diminuée afin d'élargir le faisceau FG route, augmentant la visibilité, sachant que le centre d'attention du conducteur est plus loin qu'à 50 Km/h par exemple (voir figures 14 et 15).

Il est ainsi possible de contrôler la largeur du faisceau par rapport à la position du tunnel sombre TS de manière dynamique.

Cette application est particulièrement utile pour masquer l'apparition du tunnel sombre TS sur un mur et/ou un obstacle à courte distance.

Un autre mode de suppression de ce phénomène de tunnel sombre TS peut être réalisé par basculement des coupures "L-Shape" en coupures code sur commande généré par le calculateur dans différents cas, après traitement des paramètres véhicules accessibles et/ou informations en provenance de la caméra 5, par exemple (non limitatif) :
- vitesse faible ou nulle,
- navigation (estimation de la distance véhicule/objets potentiels présents proches et/ou en fond de scène),
- détection de lumière externe (ville, ambiante, feux rouge,...),
- détection d'obstacle uniforme ou de forme spécifique (mur, porte de garage,...),
- détection de piétons dans le périmètre (infrarouge,...).

Bien entendu, l'invention n'est pas limitée aux exemples de mise en oeuvre qui viennent d'être décrits.

Selon un exemple de réalisation de l'invention, il est possible de prévoir :
- une coupure "code" pour chacun des deux projecteurs en mode "code",
- deux coupures verticales pour les modes de fonctionnement ADB et "route" qui se substituent aux coupures "codes".

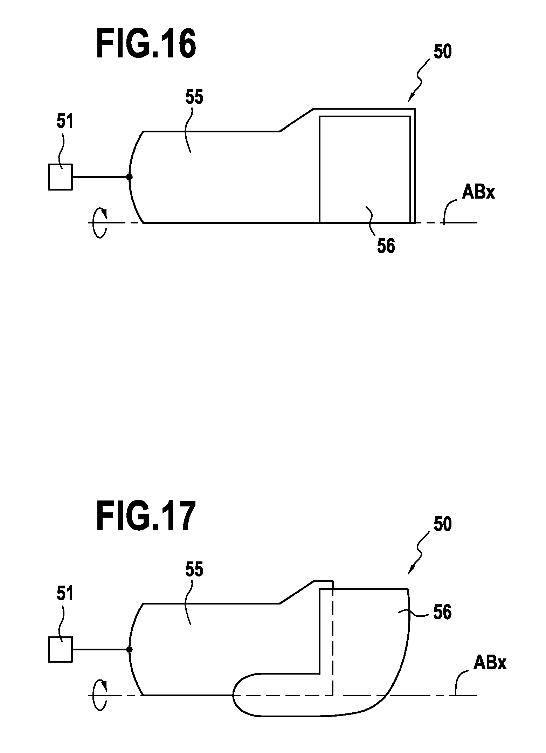

On a représenté sur les figures 16 et 17 un ensemble 50 de caches associé à un mécanisme à électroaimant 51 qui bascule à partir du bas du réflecteur elliptique et qui passe de la position de faisceau à coupure en L à la position de faisceau à coupure à 15° pour le côté droit.

Le mécanisme 51 à électroaimant actionne un cache 55 mobile en rotation.

Le faisceau partiel de base, par exemple du côté droit, est obtenu par interposition d'un cache fixe 56 dans le plan focal intermédiaire, avec le cache mobile 55.

L'interposition du cache mobile 55 présentant une coupure à 15° dans le faisceau masque la partie haute du cache du L et génère ainsi la coupure code.

Dans l'exemple de la figure 16, le cache fixe 56 peut être complètement occulté par le cache mobile 55.

En variante, dans l'exemple de la figure 17, le cache 55 n'occulte pas complètement le cache fixe 56, ces caches travaillant ensemble pour obtenir une coupure de type code.

Le cache mobile 55 bascule autour d'un axe sensiblement horizontal ABx situé en partie basse du réflecteur.

## Revendications

1. Système optique (100) pour véhicule automobile, notamment d'éclairage, comportant :
- un premier projecteur (1), notamment agencé pour un montage côté droit, ou respectivement gauche, du véhicule, ce projecteur étant agencé pour pouvoir basculer, optiquement, entre deux faisceaux partiels de types différents,
- un deuxième projecteur (2), notamment agencé pour un montage côté gauche, ou respectivement droit, du véhicule, ce projecteur étant, le cas échéant, agencé pour pouvoir basculer, optiquement, entre deux faisceaux partiels de types différents,
système dans lequel :
- l'un au moins des deux projecteurs est agencé pour permettre un pivotement de l'un au moins des deux faisceaux partiels associés à ce projecteur autour d'un axe sensiblement vertical du véhicule, ce pivotement étant commandé en fonction au moins d'une information représentative de la présence d'un véhicule tiers dans l'environnement du véhicule considéré,
- l'un au moins des faisceaux partiels émis par les premier et deuxième projecteurs présente un segment de coupure (CV), notamment sensiblement vertical (A), ce segment de coupure servant à délimiter une zone sombre (ZS) dans un faisceau lumineux global (FG) résultant de la combinaison de ce faisceau partiel avec l'un des faisceaux partiels de l'autre projecteur, cette zone sombre étant de préférence variable lors d'un pivotement de l'un au moins des faisceaux partiels en fonction de l'information représentative de la présence d'un véhicule tiers (VT) dans l'environnement du véhicule considéré.

2. Système selon la revendication 1, **caractérisé par le fait que** l'un au moins des premier et deuxième projecteurs (1 ; 2), notamment les deux projecteurs, est (sont) agencé(s) chacun pour pouvoir basculer, optiquement, seulement entre deux faisceaux partiels de types différents.

3. Système selon l'une des revendications précédentes, **caractérisé par le fait que** ledit segment de coupure sensiblement vertical (CV) se prolonge par un segment de coupure sensiblement horizontal de manière à former une coupure en L.

4. Système selon la revendication précédente, **caractérisé par le fait que** le premier projecteur est agencé pour pouvoir basculer, optiquement, entre le faisceau partiel à coupure sensiblement en L et un faisceau partiel de croisement présentant un segment de coupure oblique, notamment sensiblement à 15°.

5. Système selon l'une des revendications précédentes, **caractérisé par le fait que** le deuxième projecteur est agencé pour pouvoir basculer, optiquement, entre un faisceau partiel à coupure sensiblement en L et un faisceau partiel à coupure plate.

6. Système selon les deux revendications précédentes, **caractérisé par le fait que** :
- le premier projecteur (1), notamment agencé pour pouvoir être monté côté droit du véhicule, est agencé pour pouvoir basculer, optiquement, entre le faisceau partiel à coupure sensiblement en L et le faisceau partiel de croisement présentant un segment de coupure oblique, notamment sensiblement à 15°,
- le deuxième projecteur (2), notamment agencé pour pouvoir être monté côté gauche du véhicule, est agencé pour pouvoir basculer, optiquement, entre un faisceau partiel à coupure sensiblement en L et un faisceau partiel à coupure plate (Fp),
système dans lequel :
- les deux faisceaux partiels à coupure en L droit et gauche peuvent former, en combinaison, un faisceau de route lorsque les premier et deuxième projecteurs émettent les faisceaux partiels à coupure en L, suivant des orientations angulaires respectives choisies de manière à ce que ces faisceaux partiels soient suffisamment rapprochés angulairement l'un de l'autre, la coupure en L de l'un des faisceaux partiels se trouvant alors dans le faisceau partiel de l'autre projecteur (Figure 9), et/ou
- les deux coupures en L droit et gauche peuvent délimiter la zone sombre lorsque les premier et deuxième projecteurs émettent les faisceaux partiels à coupure en L, suivant des orientations angulaires respectives choisies de manière à ce que ces faisceaux partiels soient suffisamment écartés angulairement l'un de l'autre (Figure 10), et/ou
- afin d'élargir encore la zone sombre permettant notamment d'éviter l'éblouissement d'un conducteur d'un véhicule tiers, le premier projecteur peut émettre le faisceau partiel à coupure en L tandis que le second projecteur émet le faisceau partiel à coupure plate (Figure 11), et/ou
- afin d'élargir au maximum la zone sombre permettant notamment d'éviter l'éblouissement d'un conducteur d'un véhicule tiers, le premier projecteur peut émettre le faisceau partiel de croisement avec le segment de coupure oblique, tandis que le second projecteur émet le faisceau partiel à coupure plate (Figure 12).

7. Système selon la revendication précédente, **caractérisé par le fait que**, dans le cas où les deux faisceaux partiels à coupure en L droit et gauche forment, en combinaison, un faisceau de route (Figure 9), l'écartement angulaire des deux faisceaux partiels crée à l'avant du véhicule un tunnel sombre, et **par le fait que** l'écartement angulaire entre les deux faisceaux partiels à coupure en L est commandable en fonction de la vitesse du véhicule, notamment en vue de réduire ce tunnel sombre lorsque la vitesse diminue.

8. Système selon les revendications 1 à 5, **caractérisé par le fait que** :
- le premier projecteur, notamment agencé pour pouvoir être monté côté droit du véhicule, est agencé pour émettre au moins le faisceau partiel à coupure sensiblement en L, et éventuellement, de manière sélective, également un faisceau partiel de croisement présentant un segment de coupure oblique, notamment sensiblement à 15°,
- le deuxième projecteur, notamment agencé pour pouvoir être monté côté gauche du véhicule, est agencé pour pouvoir basculer, optiquement, entre un faisceau partiel route et un faisceau partiel de croisement présentant un segment de coupure oblique, notamment sensiblement à 15°,
système dans lequel :
- en mode 'route', le premier projecteur est agencé pour émettre le faisceau partiel à coupure sensiblement en L, et le deuxième projecteur émet le faisceau partiel route, ces faisceaux partiels formant ensemble un faisceau route (Figure 1),
- en mode 'rapprochement d'un véhicule tiers', le premier projecteur est agencé pour émettre le faisceau partiel à coupure sensiblement en L, et le deuxième projecteur émet le faisceau partiel de croisement, notamment fixe, ces faisceaux partiels formant un faisceau global présentant une zone sombre de manière à éviter d'éblouir le conducteur du véhicule tiers (Figure 3).

9. Système selon l'une des revendications précédentes, **caractérisé par le fait que** seul l'un des premier et deuxième projecteurs est agencé pour pouvoir faire varier l'orientation du ou des faisceaux partiels associés, l'autre projecteur émettant le ou les faisceaux partiels sans possibilité de changement d'orientation du ou des faisceaux associés.

10. Système selon l'une des revendications précédentes, **caractérisé par le fait que** l'orientation angulaire du ou des faisceaux partiels est commandée en fonction au moins d'une information choisie parmi : une vitesse du véhicule, un virage du véhicule, une détection d'un obstacle par notamment une caméra ou un radar ou un lidar ou des données GPS.

11. Système selon l'une des revendications précédentes, **caractérisé par le fait que** les projecteurs sont agencés de manière à ce que la zone sombre, destiné notamment à éviter d'éblouir un véhicule tiers, est déplaçable de manière à suivre le mouvement du véhicule tiers, notamment à l'aide de la détection du véhicule tiers par une caméra ou un radar ou un lidar, ou de données GPS.

12. Système optique (100) pour véhicule automobile, notamment d'éclairage, comportant :
- un premier projecteur, notamment agencé pour pouvoir être monté côté droit du véhicule, agencé pour émettre au moins un faisceau partiel à coupure sensiblement en L, et éventuellement, de manière sélective, également un faisceau partiel de croisement présentant un segment de coupure oblique, notamment sensiblement à 15°,
- un deuxième projecteur, notamment agencé pour pouvoir être monté côté gauche du véhicule, agencé pour pouvoir basculer, optiquement, entre un faisceau partiel route et un faisceau partiel de croisement présentant un segment de coupure oblique, notamment sensiblement à 15°,
système dans lequel les projecteurs sont agencés pour émettre le ou les faisceaux partiels sans possibilité de changement d'orientation du ou des faisceaux associés.

13. Projecteur notamment pour un système selon l'une des revendications précédentes, comportant un ensemble de caches (24), ces caches étant agencés pour réaliser la ou les coupures dans la ou les faisceaux partiels associés à ce projecteur, cet ensemble de caches étant mobile en rotation, de préférence à l'aide d'un moteur électrique ou par l'intermédiaire d'un électroaimant.

14. Procédé pour générer dans un faisceau lumineux, notamment un faisceau de route, une zone sombre, à l'aide d'au moins un projecteur capable d'émettre un faisceau partiel avec un segment de coupure sensiblement vertical (CV), et éventuellement également à l'aide d'un faisceau anti-brouillard du véhicule ou un faisceau 'cornering', ces derniers faisceaux ayant une coupure plate.

15. Procédé pour générer, dans un faisceau lumineux, une zone sombre, ce procédé utilisant le système selon l'une des revendications 1 à 12.

16. Procédé selon l'une des deux revendications précédentes, **caractérisé par le fait que** l'orientation angulaire de l'un au moins des faisceaux partiels est commandée par un dispositif DBL du projecteur correspondant.
